# EUROPÄISCHE PATENTSCHRIFT

(11) **EP 1 003 666 B1**
(45) Veröffentlichungstag und Bekanntmachung des Hinweises auf die Patenterteilung: **06.09.2006**
(21) Anmeldenummer: 99929257.6
(22) Anmeldetag: 17.06.1999
(51) Int. Cl.: B62K 17/00, B62K 3/04, A63B 69/16

(54) **ZWEIRAD IN FORM EINES LAUFRADES**
TWO-WHEELER IN THE FORM OF A DANDY HORSE
DEUX ROUES DE TYPE DRAISIENNE

(30) Priorität: 19.06.1998 DE 29810961 U
(43) Veröffentlichungstag der Anmeldung: 31.05.2000
(73) Patentinhaber: Stocksmeier, Eckart, 32657 Lemgo (DE)
(72) Erfinder: Stocksmeier, Eckart, 32657 Lemgo (DE)
(74) Vertreter: Hanewinkel, Lorenz
(86) Internationale Anmeldenummer: PCT/EP1999/004202
(87) Internationale Veröffentlichungsnummer: WO 1999/067123

(56) Entgegenhaltungen:
- DE-U- 7 530 321
- DE-U- 29 509 586
- FR-A- 762 506

## Beschreibung

Die Erfindung bezieht sich auf ein Zweirad in Form eines Laufrades aus Metall und/oder Kunststoff und/oder einem Verbundstoff, welches durch den Benutzer durch Abstoßen (Laufen) seiner Füße auf der Fahrbahn angetrieben wird, mit einem Rahmen aus einem obenliegenden Rahmenlängsrohr mit einem Steuerrohr mit einer darin drehbar gelagerten mit einem Lenker verbundenen Vorderradgabel mit einem daran gelagerten Vorderrad und wobei anderenends an dem Rahmenlängsrohr ein Sattelstützrohr mit einem Sattel und einer Hinterradgabel und mit einem darin drehbar gelagerten Hinterrad befestigt ist wobei das Rahmenlängsrobr ein arretierbares Klappscharnier oder eine Steckverbindung aufweist, und wobei Sicherheitsbremsen an den Rädern angeordnet sind.

Ein derartiges Laufrad ist aus der DE-U 295 09 586 bekannt. Dieses Laufrad ist als ein Trainingsgerät gedacht, das häufig mit einem Fahrzeug auf ein geeignetes Trainingsgelände transportiert werden muss, weshalb es eine Steck- oder Klappverbindung aufweist. Das Rad ist jedoch nur für im wesentlichen ebenes Gelände tauglich, da ein Bergabfahren gefährlich und beschwerlich ist.

Aufgabe der Erfindung ist es, ein derartiges seit vielen Jahrzehnten bekanntes Zweirad in Form eines einfachen und kostengünstig aufgebauten, sowie stabil und dennoch leicht ausgeführten Laufrades zu schaffen, welches ein optimales Körperfitnessgerät im Freien, insbesondere auch in bergigem Gelände, darstellt.

Diese Aufgabe wird erfindungsgemäß durch die kennzeichnenden Merkmale des Patentanspruchs 1 gelöst. Die Fußrasten ermöglichen eine gefahrlose Bergabfahrt.

Die sich daran anschließenden Unteransprüche beinhalten Gestaltungsmerkmale, welche vorteilhafte und förderliche Weiterbildungen der Aufgabenlösung darstellen.

Das Laufrad gemäß der Erfindung hat einen konstruktionsmäßig günstig aufgebauten und aus vorteilhaften Materialien bestehenden Rahmen, der in seiner Herstellung einfach und kostengünstig und dennoch stabil und leicht ist und dem gesamten Laufrad die Eigensehaft eines optimalen Fitnessgerätes gibt, welches im Freien zu benutzen ist.

Dieses Laufrad hat keinen mechanischen Antrieb, wie z. B. Kettenantrieb mit Pedalen, und wird zur Körperertüchtigung durch den Benutzer selbst in Bewegung versetzt, wodurch es ein optimales Gymnastikvehikel für viele Funktionen zum Training des menschlichen Körpers dient. Der Rahmen des Laufrades kann in den unterschiedlichsten Variationen in fester Form ausgeführt sein.

Weiterhin läßt sich das Laufrad für den Transport und die Lagerung als Klapprad oder als zerlegbares (trennbares Rad) ausbilden, so daß es in einem Behältnis beim Transport (z. B. auf der Reise) mitgenommen werden kann. Dieses Laufrad ist aufgrund seiner Rahmenkonstruktion und seiner Ausgestaltung mit Zubehörteilen der Straßenverkehrsverordnung entsprechend ausgeführt und ermöglicht eine verkehrsgerechte und gefahrlose Benutzung.

Dieses Laufrad stellt ein gutes Trimmdichgerät in freier Natur dar und steigert das Lebensgefühl und den Wert des Benutzers. Der Benutzer erhält durch das Selbstwertgefühl und die persönliche Sicherheit eine positive Erfahrung bei der Anwendung.

Auf den Zeichnungen ist ein Ausführungsbeispiel in Variationen dargestellt, welches nachfolgend näher erläutert wird. Es zeigt:
- Fig. 1: eine Perspektive eines antriebslosen Zweirades in Form eines Laufrades mit Rahmen aus im Querschnitt eckigen Rohren und Streben und dabei schrägem oberen Rahmenlängsrohr,
- Fig. 2: eine Perspektive des als Klapprad ausgebildeten Laufrades mit im obenliegenden Rahmenlängsrohr eingesetzten Klappscharnier,
- Fig. 3: eine Seitenansicht des Laufrades mit Rahmen mit Doppelrohren und Doppelstreben und dabei horizontalen oberen Rahmenlängsrohr,
- Fig. 4: eine Seitenansicht des Laufrades mit im obenliegenden Rahmenlängsrohr angeordneten Klapp- oder Steckorgan für das Zusammenklappen bzw. Teilen des Laufrades,
- Fig. 5: eine Rückansicht des Laufrades mit an der Hinterradnabe angebrachten klappbaren Fußstützen,
- Fig. 6: eine Seitenansicht eines Teiles des Rahmenlängsrohres mit eingesetztem Klappscharnier,
- Fig. 7: eine Seitenansicht im teilweisen Schnitt eines Teiles des Rahmenlängsrohres mit eingesetzter Steckverbindung.

Das Zweirad ist in Form eines antrieblosen Laufrades ausgebildet, welches durch den Benutzer durch Abstoßen (Laufen) seiner Füße auf der Fahrbahn angetrieben wird. Dieses Laufrad hat einen Rahmen (1, 2) mit einem darin drehbar gelagerten Vorder- und Hinterrad (3, 4), einem vom Rahmen (1, 2) getragenen Sattel (5) und einem im Rahmen (1, 2) gehaltenen Lenker (6) für das Vorderrad (3).

Der Rahmen (1, 2) besteht aus einem obenliegenden Rahmenlängsrohr (7, 8), einem Steuerrohr (9) mit Vorderradgabel (10), einem Sattelstützrohr (11) und einer Hinterradgabel (12, 13) aus Metall und/oder Kunststoff und/oder einem Verbundstoff.

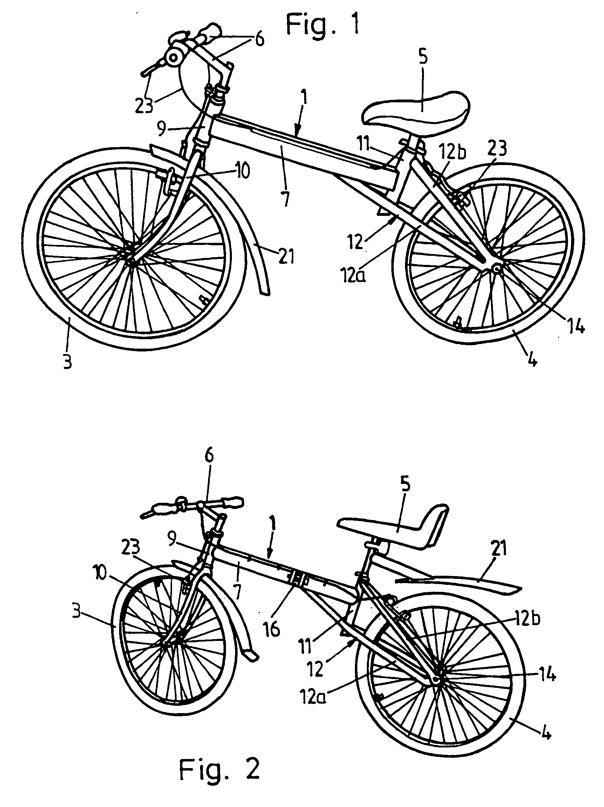

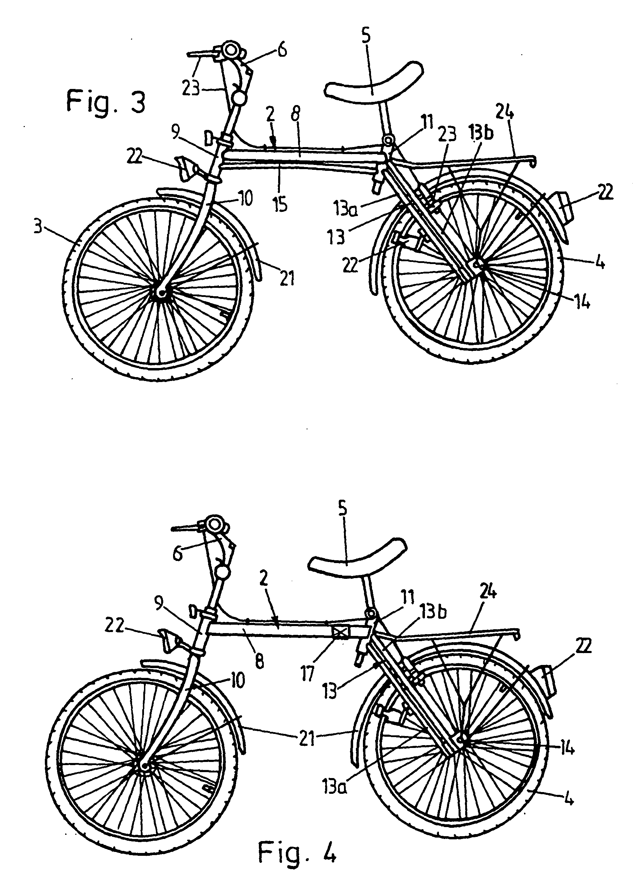

Das Rahmenlängsrohr (8) gemäß Fig. 3 und 4 verläuft horizontal zwischen Steuer- und Sattelstützrohr (9, 11) und das Rahmenlängsrohr (7) gemäß Fig. 1 und 2 ist geneigt angeordnet und verläuft vom Sattelstützrohr (11) aus schräg nach oben zum Steuerrohr (9) hin.

Das Rahmenlängsrohr (8) hat einen kreisförmigen Querschnitt und das Rahmenlängsrohr (7) zeigt einen eckigen, vorzugsweise quadratischen oder rechteckigen Querschnitt, wobei die größere Rechteckausdehnung in Höhenrichtung verläuft.

Das schräge Rahmenlängsrohr (7) mit Sattelstützrohr (11) ist gegenüber der Hinterradnabe (14) durch seine aus jeweils zwei beiderseits des Hinterrades (4) angeordnete, schräg nach oben auseinander divergierend verlaufende Hinterradstreben (12a, 12b) mit rundem oder eckigem Querschnitt gebildete Hinterradgabel (12) abgestützt; dabei verläuft jeweils eine Strebe (12b) von der Hinterradnabe (14) zum Sattelstützrohr (11) und jeweils die andere Strebe (12a) von der Hinterradnabe (14) zum Rahmenlängsrohr(7) wie Fig. 1 und 2 zeigen.

Das horizontal verlaufende Rahmenlängsrohr (8) mit dem Sattelstützrohr (11) wird gegenüber der Hinterradnabe (14) durch zwei jeweils beiderseits des Hinterrades (4) angeordnete, von der Hinterradnabe (14) zum Sattelstützrohr (11) schräg nach oben verlaufende, parallele Hinterradgabelstrebe (13a, 13b) mit rundem oder eckigem Querschnitt abgestützt (Fig. 3 und 4).

Die beiden unterschiedlichen Streben (12a, 12b/13a, 13b) der Hinterradgabeln (12, 13) können sowohl bei dem Rahmen (2) mit horizontalem Rahmenlängsrohr (8) als auch bei dem Rahmen (1) mit schrägem Rahmenlängsrohr (7) eingesetzt werden.

Dem Rahmenlängsrohr (7, 8) ist/kann eine zwischen Sattelstützrohr (11) und Steuerrohr (9) verlaufende, unter dem Rahmenlängsrohr (7, 8) parallel oder bogenförmig beabstandet verlaufende Strebe (15) mit rundem oder eckigem Querschnitt zugeordnet sein, wobei der Querschnitt dieser Strebe (15) kleiner als der Rahmenlängsrohrquerschnitt ist (Fig. 3).

Das Laufrad läßt sich gemäß Fig. 2 und 4 als Klapprad ausbilden, und dabei ist in das Rahmenlängsrohr (7, 8) ein arretierbares Klappscharnier (16) eingesetzt.

Weiterhin kann das Laufrad in zwei Laufradteile trennbar (zerlegbar) sein, wobei das Rahmenlängsrohr (7, 8) quer zur Längsrichtung geteilt ist und eine arretierbare Steckverbindung (17) aufweist.

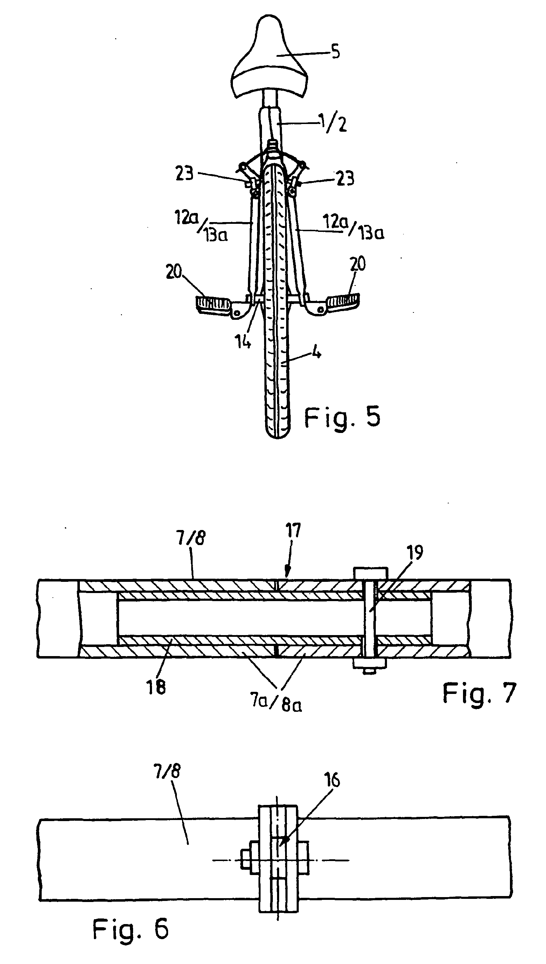

Das Klappscharnier (16) - Fig. 6) ist in bei Klapp-Fahrrädern bekannter Weise ausgeführt.

Die Steckverbindung (17) gemäß Fig. 7 für das zerlegbare Laufrad hat ein geteiltes Rahmenlängsrohr (7, 8) in dessen einem Rohrabschnitt (7a oder 8a) ein Verbindungsrohr oder -stab (18) eingesteckt und in einem Rohrabschnitt (7a) oder (8a) festgelegt ist und der andere Rohrabschnitt (8a) oder (7a) wird auf das aus dem Rohrabschnitt (7a) oder (8a) herausstehende Verbindungsrohr (18) aufgesteckt und durch ein Sicherungsmittel (19), wie Steck- oder Rastbolzen o. dgl. arretiert.

Weiterhin kann die Steckverbindung (17) auch durch Querschnittsverringerung eines Rohrabschnittes (7a) oder (8a), der dann in den normalen Rohrabschnitt (8a) oder (7a) eingesteckt wird, vorgenommen werden.

In der Hinterradnabe (14) läßt sich beiderseits des Hinterrades (4) jeweils eine klappbare Fußstütze (20) legen (Fig. 5).

Der Rahmen (1, 2) kann gegenüber den Rädern (3, 4) abgefedert ausgeführt sein.

Das Laufrad läßt sich mit/ohne Schutzblechen (21) für die Räder (3, 4) ausstatten.

Weiterhin ist das Laufrad mit einer Beleuchtung (22) -Lampen und Dynamo-, Sicherheitsbremsen (23) -Handgriffen, Bowdenzug und Bremsbacken-, einem Gepäckträger (24), einem klappbaren Ständer (nicht dargestellt) sowie mit einem Normal- oder Bananensattel (5) mit/ohne Stoßdämpfern ausgestaltet.

Die Räder (3, 4) können Doppelkammerfelgen haben.

Als Rahmenwerkstoffe lassen sich normaler Fahrradstahl, Aluminium, Kunststoff mit Glasfaserverstärkung (Kohlenstoff/-Glasfieber/Carbon) oder andere geeignete werkstoffe einsetzen.

Die Größe des Laufrades ist verschieden und in den herkömmlichen 20-, 24-, 26- und 28-ziger Größen ausführbar.

## Patentansprüche

1. Zweirad in Form eines Laufrades aus Metall und/oder Kunststoff und/oder einem Verbundstoff, welches durch den Benutzer durch Abstoßen seiner Füße auf der Fahrbahn angetrieben wird, mit einem Rahmen (1, 2) aus einem obenliegenden Rahmenlängsrohr (7, 8) mit einem Steuerrohr (9) mit einer darin drehbar gelagerten mit einem Lenker verbundenen Vorderradgabel (10) mit einem daran gelagerten Vorderrad (3) und wobei anderenends an dem Rahmenlängsrohr (7, 8) ein Sattelstützrohr (11) mit einem Sattel (5) und einer Hinterradgabel (12, 13) und mit einem darin drehbar gelagerten Hinterrad (4) befestigt ist, wobei das Rahmenlängsrohr (7, 8) ein arretierbares Klappscharnier (16) oder eine Steckverbindung (17) aufweist, und wobei Sicherheitsbremsen (23) an den Rädern (3, 4) angeordnet sind, **dadurch gekennzeichnet, dass** an einer Hinterradnabe (14) beiderseits des Hinterrades (4) jeweils eine klappbare Fußstütze (20) festgelegt ist.

2. Zweirad nach Anspruch 1, **dadurch gekennzeichnet, dass** das Rahmenlängsrohr (7, 8) einen eckigen, vorzugsweise quadratischen oder rechteckigen Querschnitt hat.

3. Zweirad nach einem der Ansprüche 1 oder 2, **dadurch gekennzeichnet, dass** das Rahmenlängsrohr (7) mit dem Sattelstützrohr (11) gegenüber einer Hinterradnabe (14) durch jeweils zwei beiderseits des Hinterrades (4) angeordnete schräg nach oben auseinander divergierend verlaufende Hinterradgabelstrebcn (12a, 12b) mit einem runden oder eckigen Querschnitt abgestützt ist, und beidseitig jeweils eine der Streben (12b) von der Hinterradnabe (14) zum Sattelstützrohr (11) und jeweils die andere der Streben (12a) von der Hinterradnabe (14) zum Rahmenlängsrohr (7) verläuft.

4. Zweirad nach einem der Ansprüche 1 bis 3, **dadurch gekennzeichnet, dass** das Rahmenlängsrohr (8) mit dem Sattelstützrohr (11) gegenüber der Hinterradnabe (14) zum Sattelstützrohr (11) schräg nach oben verlaufende, parallele Hintergabelradstreben (13a, 13b) mit rundem oder eckigen Querschnitt abgestützt ist.

5. Zweirad nach einem der Ansprüche 1 bis 4, **dadurch gekennzeichnet, dass** das Rahmenlängsrohr (8) eine zwischen dem Sattelstützrohr (11) und dem Steuerrohr (9) parallel oder bogenförmig verlaufende, unter dem Rahmenlängsrohr (8) beabstandete Strebe (15) mit einem runden oder eckigen Querschnitt zugeordnet ist, wobei der Strebenquerschnitt kleiner als der Rahmenlängsrohrquerschnitt ist.

6. Zweirad nach einem der Ansprüche 1 bis 5, **dadurch gekennzeichnet, dass** der Rahmen (1, 2) gegenüber den Rädern (3, 4) abgefedert ist.

7. Zweirad nach einem der Ansprüche 1 bis 6, **dadurch gekennzeichnet, dass** dasselbe eine Beleuchtung (22), einen Gepäckträger (24) und einen klappbaren Ständer hat und die Räder (3, 4) Doppelkammerfelgen aufweisen.

## Claims

1. A two-wheeler in the form of a dandy-horse made from metal and/or plastic and/or a composite material, which is propelled by the user by pushing with his or her feet on a pavement, the two-wheeler comprising a frame (1, 2) consisting of an upper longitudinal frame tube (7, 8) with a steering tube (9) with a front-wheel fork (10) which is rotatably supported inside the steering tube and connected to handlebars, a front wheel (3) being rotatably seated in the fork, and wherein a saddle-support tube (11) with a saddle (5) and a back-wheel fork (12, 13) is attached at the other end of the longitudinal frame tube (7, 8), a back wheel (4) being rotatably seated in the fork, wherein the longitudinal frame tube (7, 8) features a locking hinge (16) or a locking pin connection (17), and wherein safety brakes (23) are positioned on the wheels (3, 4), **characterized in that** a collapsible foot support (20) is fixed on either side of the back-wheel (4)
on a back-wheel hub (14).

2. Two-wheeler according to claim 1, **characterized in that** the longitudinal frame tube (7, 8) has a polygonal, preferably square or rectangular, cross section.

3. Two-wheeler according to one of the claims 1 or 2, **characterized in that** the longitudinal frame tube (7) with the saddle-support tube (11) is supported with respect to the back-wheel hub (14) by back-wheel fork stays (12a, 12b) having a round or polygonal cross section two of which are arranged on each side of the back-wheel (4), diverging to extend diagonally upward and, on both sides, one stay (12b) extends from the back-wheel hub (14) to the saddle-support tube (11) and the respective other stay (12a) extends from the back-wheel hub (14) to the longitudinal frame tube (7).

4. Two-wheeler according to one of the claims 1 to 3, **characterized in that** the longitudinal frame tube (8) with the saddle-support tube (11) is supported with respect to the back-wheel hub (14) by parallel back-wheel fork stays (13a, 13b) having a round or polygonal cross section which extend diagonally upward.

5. Two-wheeler according to one of the claims 1 to 4, **characterized in that** a stay (15) having a round or polygonal cross section is associated with the longitudinal frame tube (8), extending between the saddle-support tube (11) and the steering tube (9) and at a distance below the longitudinal frame tube (7, 8) either parallel to the tube or in a curved shape, wherein the cross section of the stay is smaller that of the longitudinal frame tube.

6. Two-wheeler according to one of the claims 1 to 5, **characterized in that** the frame is spring-mounted with respect to the wheels (3, 4).

7. Two-wheeler according to one of the claims 1 to 6, **characterized in that** it has lights (22), a pack carrier (24) and a kickstand, and the wheels (3, 4) have dual-chamber rims.

## Revendications

1. Deux roues de type draisienne en métal et/ou plastique et/ou une matière composite, qui est actionnée par l'utilisateur en poussant avec ses pieds sur une chaussée, le deux roues comportant un cadre (1, 2) se composant d'un tube de cadre longitudinal supérieur (7, 8) avec un tube de direction (9) avec une fourche de roue avant (10) qui est soutenue à l'intérieur du tube de direction de manière tournante et reliée à un guidon, avec une roue directrice (3) pivotée dans la fourche et, attaché à l'autre extrémité du tube longitudinal de cadre (7, 8), un tube support de selle (11) avec une selle (5) et une fourche de roue arrière (12, 13), une roue arrière (4) étant pivotée dans la fourche, et le tube longitudinal de cadre (7, 8) comporte une charnière de rabattement (16) ou un raccord enfichable (17), et des freins de sécurité (23) sont placés sur les roues (3, 4), **caractérisée en ce qu'**un appui de pied pliant (20) est fixé de chaque côté de la roue arrière (4) sur un moyeu de roue arrière (14).

2. Deux roues selon la revendication 1, **caractérisé en ce que** le tube longitudinal de cadre (7, 8) a une section polygonale, de préférence carrée ou rectangulaire.

3. Deux roues selon une des revendications 1 ou 2, **caractérisé en ce que** le tube longitudinal de cadre (7) avec le tube support de selle (11) est soutenu par rapport au moyeu de la roue arrière (14) par des membres de fourche de roue arrière (12a, 12b) ayant une section circulaire ou polygonale, deux d'entre eux étant arrangés de chaque côté de la roue arrière (4), se prolongeant vers le haut en divergeant et, à chaque côté, un membre (12b) s'étend du moyeu de la roue arrière (14) au tube support de selle (11) et l'autre membre (12a) respectif s'étend du moyeu de la roue arrière (14) au tube longitudinal de cadre (7).

4. Deux roues selon une des revendications 1 à 3, **caractérisé en ce que** le tube longitudinal de cadre (8) avec le tube support de selle (11) est soutenu par rapport au moyeu de la roue arrière (14) par des membres de fourche de roue arrière (13a, 13b) parallèles, ayant une section circulaire ou polygonale, qui s'étendent diagonalement vers le haut.

5. Deux roues selon une des revendications 1 à 4, **caractérisé en ce que** un membre (15) ayant une section circulaire ou polygonale est associé au tube longitudinal de cadre (8), se prolongeant entre le tube support de selle (11) et le tube de direction (9) et à une distance au-dessous du tube longitudinal de cadre (7, 8), parallèle au tube ou dans un arc, la section transversale du membre étant plus petite que celle du tube longitudinal de cadre.

6. Deux roues selon une des revendications 1 à 5, **caractérisé en ce que** le cadre est suspendu sur ressorts par rapport aux roues (3, 4).

7. Deux roues selon une des revendications 1 à 6, **caractérisé en ce que** il dispose d'un éclairage (22), un porte-bagages (24) et un béquille repliable, et les roues (3, 4) ont des jantes à double chambre.
